# EUROPEAN PATENT APPLICATION

(11) **EP 4 783 093 A1**
(43) Date of publication of application: **29.07.2026**
(21) Application number: 25225872.8
(22) Date of filing: 19.12.2025
(51) Int. Cl.: G06Q 20/18, G06Q 20/20, G06Q 20/40, G07G 3/00

(54) **MONITORING DEVICE, METHOD, AND STORAGE MEDIUM**

(30) Priority: 27.01.2025 JP 2025011506
(71) Applicant: Toshiba TEC Kabushiki Kaisha, Tokyo 141-8562 (JP)
(72) Inventor: Nobuoka, Tetsuya, Tokyo, 141-8562 (JP); Kurata, Masachika, Tokyo, 141-8562 (JP)
(74) Representative: Bandpay & Greuter

(57) **Abstract**

A monitoring device includes a network interface; a memory; and a processor configured to execute a program stored in the memory to perform: acquiring activity information related to an item to be purchased by a customer and received via the network interface from a self-service point of sale (POS) terminal together with identification information of the POS terminal, the activity information including scan information related to scanning of the item by a scanner of the POS terminal and a video obtained by capturing an activity related to the item and performed by the customer at the POS terminal, detecting a position and a head orientation of the customer from the video, determining whether the customer is committing fraud based on the activity information and the position and the head orientation of the customer, and upon determining that the customer is committing fraud, causing the POS terminal to issue a notification.

## Description

### FIELD

Embodiments described herein relate generally to a monitoring device, a method, and a storage medium.

### BACKGROUND

The number of self-checkout devices enabling customers to register and pay for items by themselves has been increasing. A known monitoring device for such a self-checkout device monitors the behavior of a customer by, for example, comparing the movement of an item held by the customer with an item code read by an item registration device to prevent fraud, such as intentional omission of scanning of items.

However, the related-art monitoring device could mistakenly identify customers as having committed fraud.

### SUMMARY OF THE INVENTION

The present invention provides a fraud monitoring device, a method, and a storage medium according to appended claims that can suppress false recognition of fraud during item registration.

The method may be that even when the item has been moved along the item registration path and the identification information of the item has not been read by the scanner, the customer is determined to be not committing fraud when the head orientation as viewed from the head position of the customer is not toward the scanner.

The method may comprise when the customer is determined to be committing fraud, transmitting, to the POS terminal, a fraud determination result indicating that the customer is committing fraud.

Preferably, in the method, whether the identification information of the item has been read by the scanner is determined by determining whether the scan information includes the identification information.

The method may comprise : determining, based on the video, whether the item has been moved by the customer along an item registration path for registering the item from a first area upstream of a second area facing the scanner, across the second area, to a third area downstream of the second area; determining, based on the scan information, whether identification information of the item has been read by the scanner; and when the item has been moved along the item registration path and the identification information of the item has not been read by the scanner, transmitting, to an attendant terminal being monitored by an operator, a fraud determination result indicating suspected fraud by the customer, regardless of whether the head orientation as viewed from the position of the customer is toward the scanner.

Preferably, in the method, the fraud determination result is transmitted to the attendant terminal together with the identification information of the POS terminal and the video.

Preferably, in the method, whether the identification information of the item has been read by the scanner is determined by determining whether the scan information includes the identification information.

Preferably, in the method, the position of the customer is detected by identifying a head area of the customer in the video, performing elliptical approximation on the identified head area to obtain an approximated elliptical area, and setting a center of gravity of the approximated elliptical area as the position of the customer.

According to an aspect of this disclosure, a monitoring device connectable to a self-service point of sale (POS) terminal installed in a store, includes: a network interface; a memory; and a processor configured to execute a program that is stored in the memory to perform the steps of: acquiring activity information related to an item sold at the store and to be purchased by a customer and received via the network interface from the POS terminal together with identification information of the POS terminal, the activity information including scan information related to scanning of the item by a scanner of the POS terminal and a video obtained by capturing an activity related to the item and performed by the customer at the POS terminal, detecting a position and a head orientation of the customer from the video, determining whether the customer is committing fraud based on the activity information and the position and the head orientation of the customer, and upon determining that the customer is committing fraud, causing the POS terminal to issue a notification.

### BRIEF DESCRIPTION OF THE DRAWINGS

FIG. 1 is a block diagram illustrating a schematic configuration of a fraud monitoring system according to an embodiment.
FIG. 2 is a front view illustrating an example of a self-service POS terminal included in the fraud monitoring system.
FIG. 3 is a hardware block diagram illustrating an example of a hardware configuration of the self-service POS terminal.
FIG. 4 is a diagram illustrating an example of an image captured by a camera.
FIG. 5 is a hardware block diagram illustrating an example of a hardware configuration of a fraud monitoring device included in the fraud monitoring system.
FIG. 6 is a diagram illustrating an example of a structure of an activity information file stored in the fraud monitoring device.
FIG. 7 is a diagram for describing a method performed by the fraud monitoring device to recognize a scan operation performed by a customer, based on an image captured by a camera.
FIG. 8 is a diagram for describing a method performed by the fraud monitoring device to detect the position of a customer and the head orientation of the customer based on an image captured by a camera.
FIG. 9 is a diagram illustrating an example in which the fraud monitoring device determines that the face of the customer is directed toward a scanner.
FIG. 10 is a diagram illustrating an example in which the fraud monitoring device determines that the face of the customer is not directed toward the scanner.
FIG. 11 is a functional block diagram illustrating an example of a functional configuration of the fraud monitoring system.
FIG. 12 is a flowchart illustrating an example of a process performed the self-service POS terminal included in the fraud monitoring system.
FIG. 13 is a flowchart illustrating an example of a process performed by the fraud monitoring device included in the fraud monitoring system.
FIG. 14 is a flowchart illustrating an example of a process performed by an attendant terminal included in the fraud monitoring system.

### DETAILED DESCRIPTION

Hereinafter, embodiments will be described in detail with reference to the drawings. However, this disclosure is not limited to the embodiments described below.

Hereinafter, a fraud monitoring system 10 according to an embodiment of the present disclosure will be described with reference to the drawings.

### (Schematic Configuration of Fraud Monitoring System)

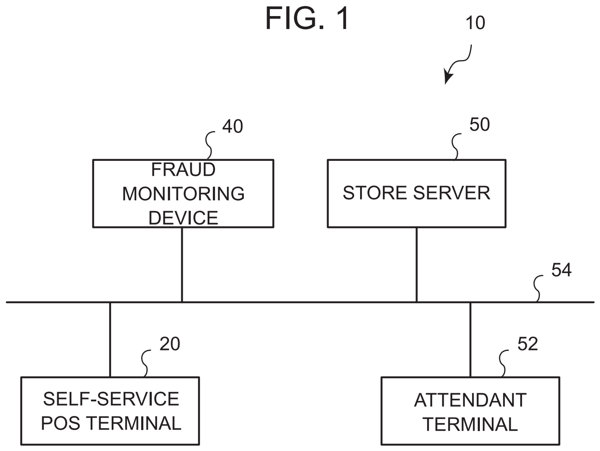

A schematic configuration of the fraud monitoring system 10 according to the embodiment will be described with reference to FIG. 1. FIG. 1 is a block diagram illustrating a schematic configuration of the fraud monitoring system 10 according to the embodiment.

or example, in a store such as a retail store, the fraud monitoring system 10 monitors fraud, such as intentional omission of scanning in which a customer places an item to be purchased in, for example, a reusable bag before scanning the identification information (for example, an item code) of the item to register and pay for the item. The fraud monitoring system 10 also provides a notification when detecting fraud.

The fraud monitoring system 10 includes a self-service POS terminal 20, a fraud monitoring device 40, a store server 50, and an attendant terminal 52, which are connected to each other via an in-store network 54.

In general, multiple self-service POS terminals 20 are provided in a store, and each customer operates a self-service POS terminal 20 to perform a registration process of registering items to be purchased and a payment process of making payment for the registered items. The self-service POS terminal 20 is an example of a sales data processing device in the present disclosure.

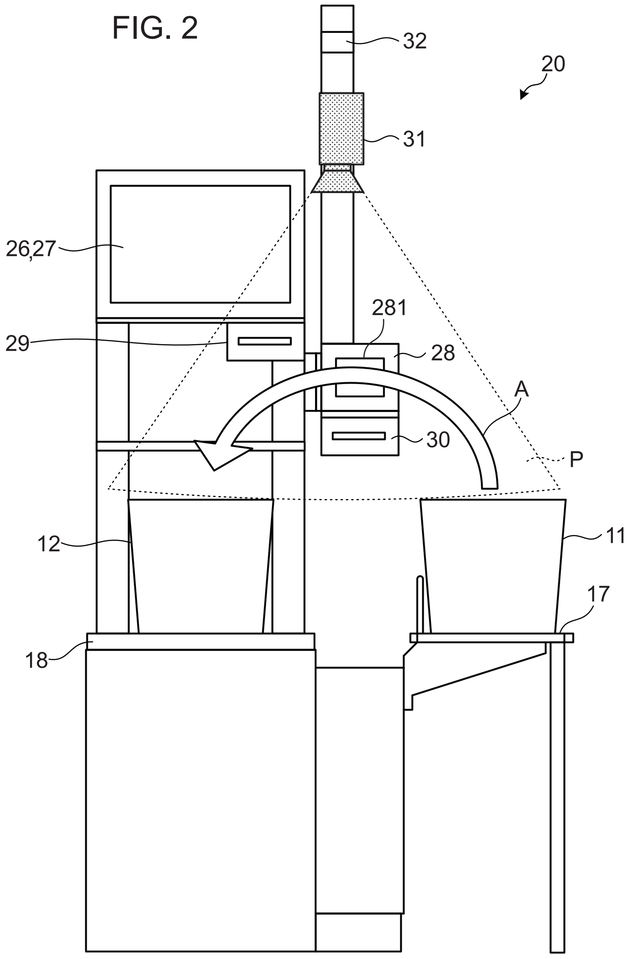

The fraud monitoring device 40 communicates with the self-service POS terminal 20 via the in-store network 54. The fraud monitoring device 40 acquires, from the self-service POS terminal 20, identification information (terminal ID) that uniquely identifies the self-service POS terminal 20, identification information (for example, item code) that uniquely identifies an item to be purchased by a customer and is read by a scanner 28 (see FIG. 2) included in the self-service POS terminal 20, and a video recording an activity performed by the customer holding and moving the item.

The fraud monitoring device 40 determines whether an unscanned item, the identification information of which has not been scanned, is placed in, for example, a reusable bag based on information (identification information of scanned items and a video of the customer) acquired from the self-service POS terminal 20. Furthermore, upon detecting fraud or suspected fraud committed by the customer, the fraud monitoring device 40 notifies the self-service POS terminal 20 and/or the attendant terminal 52 of the detection of the fraud or suspected fraud.

The fraud monitoring device 40 detects the position of the customer operating the self-service POS terminal 20 and the head orientation of the customer based on a video of the customer acquired from the self-service POS terminal 20. The fraud monitoring device 40 determines that the customer is committing fraud only when the face of the customer is directed toward the scanner 28 (see FIG. 2) of the self-service POS terminal 20.

The store server 50 communicates with the self-service POS terminal 20, the fraud monitoring device 40, and the attendant terminal 52 to monitor their operating states. The store server 50 acquires information (sales information) related to payment from the self-service POS terminal 20. The store server 50 also distributes the latest version of an item master, which is a master file storing item information, to the self-service POS terminal 20 and the fraud monitoring device 40 as appropriate.

The attendant terminal 52 acquires information on whether a customer is committing fraud from the fraud monitoring device 40. When an operator of the attendant terminal 52 determines that there is a possibility that the customer is committing fraud (or suspected fraud) based on the information acquired from the fraud monitoring device 40, the operator instructs a store clerk, via, for example, a mobile terminal (not shown) carried by the store clerk, to go to the corresponding self-service POS terminal 20 and check the situation.

The configuration of the fraud monitoring system 10 is not limited to the example illustrated in FIG. 1, and the self-service POS terminal 20 may be configured to also include the function of the fraud monitoring device 40.

### (Schematic Configuration of Self-Service POS Terminal)

A schematic configuration of the self-service POS terminal 20 included in the fraud monitoring system 10 will be described with reference to FIG. 2. FIG. 2 is a front view of an example of the self-service POS terminal 20 included in the fraud monitoring system 10 according to the embodiment;

The self-service POS terminal 20 includes a display 26, a touch panel 27, a scanner 28, a payment terminal 29, a receipt printer 30, a basket stand 17, an item packing stand 18, a camera 31, and a warning light 32.

The display 26 displays various types of information related to item registration and payment, warning information indicating that a customer has committed fraud, and the like. The display 26 is, for example, a liquid crystal panel or an organic EL panel.

The touch panel 27 is disposed over the display 26 and acquires information input by the customer using various operation buttons displayed on the display 26.

The scanner 28 has a scan window 281 on the front side. The scanner 28 includes a built-in camera and captures and reads a code symbol, such as a barcode, attached to an item held over the scan window 281 using the camera. Accordingly, the scanner 28 reads identification information (for example, item code) of the item encoded in the code symbol.

The payment terminal 29 receives an input from the customer to make payment for registered items. For example, the payment terminal 29 supports cashless payment, such as credit payment, code payment, and electronic money payment. The self-service POS terminal 20 may further include a change machine (not shown) and support cash payment.

The receipt printer 30 prints the result of a transaction on a receipt and issues the receipt.

The camera 31 is disposed above the scanner 28 to face downward and captures a video of a customer scanning items.

The warning light 32 turns on or blinks when the self-service POS terminal 20 malfunctions and the customer requests help from a store clerk. Also, the warning light 32 turns on or blinks when the customer performs a fraudulent activity, to get the attention of nearby store clerks.

The basket stand 17 is a table on which the customer places a shopping basket 11 in which items are placed.

The item packing stand 18 is a table on which the customer places, for example, a reusable bag 12 (or any bag or container that belongs to the customer) in which registered items are to be placed.

The customer takes items out of the shopping basket 11 placed on the basket stand 17 one by one and holds each item over the scan window 281 of the scanner 28. After holding the item over the scan window 281 of the scanner 28, the customer places the item in the reusable bag 12 placed on the item packing stand 18. That is, the item is moved along a trajectory indicated by an arrow A. The trajectory may be referred to as an item registration path for registering items to be purchased.

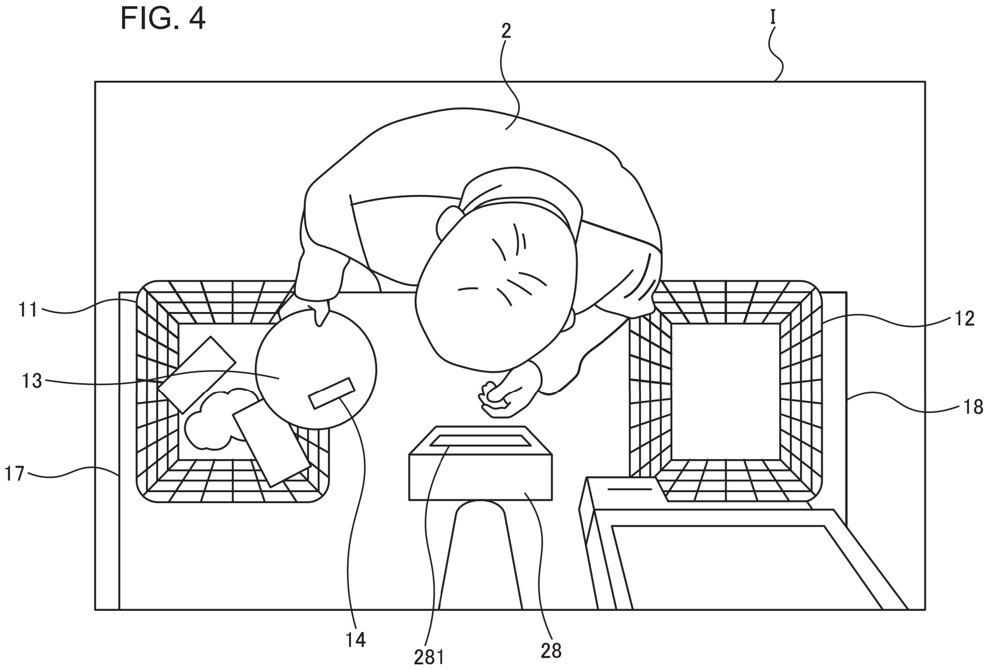

The camera 31 captures images or a video of an area (or an imaging range P in FIG. 2) covering the basket stand 17 (or the shopping basket 11), the scanner 28, and the reusable bag 12 (or the item packing stand 18). Images or a video captured by the camera 31 will be described in detail later (see FIG. 4).

### (Hardware Configuration of Self-Service POS Terminal)

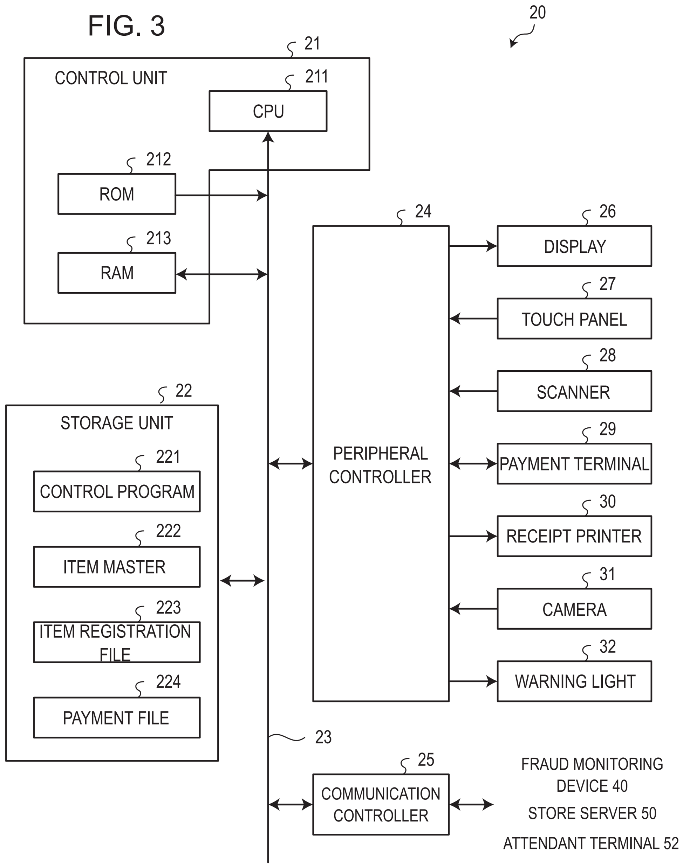

A hardware configuration of the self-service POS terminal 20 will be described with reference to FIG. 3. FIG. 3 is a hardware block diagram illustrating an example of a hardware configuration of the self-service POS terminal 20.

The self-service POS terminal 20 has a configuration in which a control unit 21, a storage unit 22, a peripheral controller 24, and a communication controller 25 are connected to each other via an internal bus 23.

The control unit 21 controls the overall operation of the self-service POS terminal 20. The control unit 21 includes a central processing unit (CPU) 211, a read-only memory (ROM) 212, and a random access memory (RAM) 213. The CPU 211 is connected to the ROM 212 and the RAM 213 via an internal bus, such as an address bus or a data bus. The CPU 211 loads various programs stored in the ROM 212 or the storage unit 22 into the RAM 213. The CPU 211 controls the operation of the self-service POS terminal 20 according to various programs loaded into the RAM 213. That is, the control unit 21 has a configuration of a general computer.

The storage unit 22 is a storage device, such as a hard disk drive (HDD) or a solid state drive (SSD). The storage unit 22 may be a non-volatile memory, such as a flash memory, that retains stored information even when the power is turned off. The storage unit 22 stores a control program 221, an item master 222, an item registration file 223, and a payment file 224.

The control program 221 is a program for controlling the overall operation of the self-service POS terminal 20. The control program 221 may be prestored in the storage unit 22 or may be provided on a computer-readable non-transitory storage medium, such as a CD-ROM, a flexible disk (FD), a CD-R, or a DVD, in an installable format or an executable format. The control program 221 may be stored in a computer connected to a network and downloaded via the network. Furthermore, the control program 221 may be provided or distributed via a network, such as the Internet.

The item master 222 is a master file that stores item information including item names and prices of items to be sold. In the item master 222, an item name, a unit price, additional information, and the like are stored for each item in association with an item code that uniquely identifies the item. Since the contents of the item master 222 are updated as needed, the self-service POS terminal 20 acquires the latest item master 222 from the store server 50 via the communication controller 25 to keep the contents of the item master 222 up to date.

The item registration file 223 is a file that stores registered item information (for example, item names, quantities, unit prices, and the like) and a total purchase amount in association with a transaction code for identifying one transaction.

The payment file 224 is a file storing the result of payment. The payment file 224 stores a transaction date, a transaction time, a payment amount, a payment method, and the like in association with a transaction code for identifying one transaction.

The control unit 21 is connected to various input and output devices, such as the display 26, the touch panel 27, the scanner 28, the payment terminal 29, the receipt printer 30, the camera 31, and the warning light 32, via the peripheral controller 24. These input and output devices are described above, and therefore their descriptions are not repeated here.

The control unit 21 receives and transmits various kinds of information from and to the fraud monitoring device 40, the store server 50, and the attendant terminal 52 via the communication controller 25.

The control unit 21 outputs an item code read by the scanner 28 and a video captured by the camera 31 to the fraud monitoring device 40 via the communication controller 25 in association with the times at which the item code and the video are acquired. The control unit 21 acquires a fraud determination result from the fraud monitoring device 40 via the communication controller 25.

The control unit 21 outputs sales information including the item registration file 223 and the payment file 224 to the store server 50 via the communication controller 25. The control unit 21 acquires the latest item master 222 from the store server 50 via the communication controller 25.

### (Images Captured by Camera)

An image I captured by the camera 31 will be described with reference to FIG. 4. FIG. 4 is a diagram illustrating an example of the image I captured by the camera 31.

The image I includes a customer 2, the shopping basket 11 placed on the basket stand 17, the reusable bag 12 placed on the item packing stand 18, and the scanner 28.

When registering an item 13, the customer 2 holds the item 13 with the right hand and takes the item 13 out of the shopping basket 11. Then, the customer 2 holds a code symbol 14, such as a barcode, attached to the item 13 over the scan window 281 of the scanner 28. When the item code is scanned, the customer 2 places the item 13 in the reusable bag 12. That is, for each item 13 in the shopping basket 11, the customer 2 repeats the process of reading the item code with the scanner 28 and placing the item 13 in the reusable bag 12. In this process, all the items 13 are moved from the shopping basket 11 toward the reusable bag 12 through an area near the scan window 281 of the scanner 28. That is, the items 13 are moved from left to right in FIG. 4. The fraud monitoring device 40 included in the fraud monitoring system 10 acquires multiple images I, that is, a video, captured at different times and analyzes an activity in which the customer 2 scans the item 13 taken out of the shopping basket 11 and stores the item 13 in the reusable bag 12.

### (Hardware Configuration of Fraud Monitoring Device)

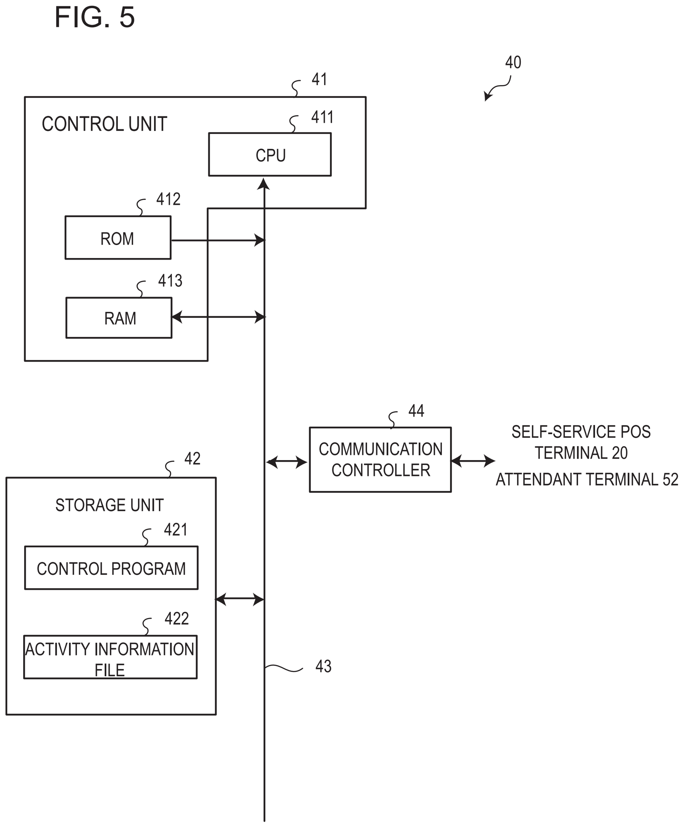

A hardware configuration of the fraud monitoring device 40 will be described with reference to FIG. 5. FIG. 5 is a hardware block diagram illustrating an example of a hardware configuration of the fraud monitoring device 40 included in the fraud monitoring system 10 according to the embodiment;

The fraud monitoring device 40 has a configuration in which a control unit 41, a storage unit 42, and a communication controller 44 are connected to each other via an internal bus 43.

The control unit 41 controls the overall operation of the fraud monitoring device 40. The control unit 41 includes a CPU 411, a ROM 412, and a RAM 413. The CPU 411 is an example of a processor. The CPU 411 is connected to the ROM 412 and the RAM 413 via an internal bus, such as an address bus or a data bus. The CPU 411 loads various programs stored in the ROM 412 or the storage unit 42 into the RAM 413. The CPU 411 controls the operation of the fraud monitoring device 40 according to various programs loaded into the RAM 413. That is, the control unit 41 has a configuration of a general computer.

The storage unit 42 is a storage device such as an HDD or an SSD. The storage unit 42 may be a non-volatile memory, such as a flash memory, that retains stored information even when the power is turned off. The storage unit 42 stores a control program 421 and an activity information file 422.

The control program 421 is a program for controlling the overall operation of the fraud monitoring device 40. The control program 421 may be prestored in the storage unit 42 or may be provided on a computer-readable non-transitory storage medium, such as a CD-ROM, a flexible disk (FD), a CD-R, or a DVD, in an installable format or an executable format. The control program 421 may be stored in a computer connected to a network and downloaded via the network. Furthermore, the control program 421 may be provided or distributed via a network, such as the Internet.

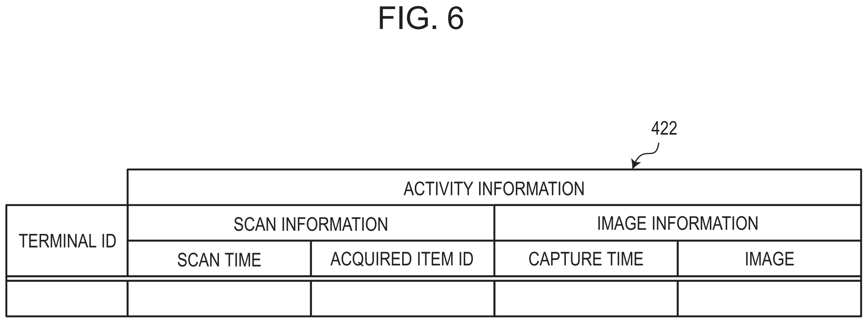

The activity information file 422 is a file that stores various types of information that indicate actions performed by the customer during item registration and is acquired from the self-service POS terminal 20. Specifically, the activity information file 422 stores scan information and image information in association with a terminal ID that uniquely identifies the self-service POS terminal 20. A specific data structure of the activity information file 422 will be described in detail later (see FIG. 6).

The control unit 41 receives and transmits various types of information from and to the self-service POS terminal 20 and the attendant terminal 52 via the communication controller 44. The communication controller 44 is an example of a network interface.

The control unit 41 acquires an item code read by the scanner 28 and a video captured by the camera 31 from the self-service POS terminal 20 via the communication controller 44 together with the times at which the item code is read and the video is captured. The control unit 41 outputs a fraud determination result to the self-service POS terminal 20 via the communication controller 44.

The control unit 41 also outputs a fraud determination result to the attendant terminal 52 via the communication controller 44.

### (Data Structure of Activity Information File)

A data structure of the activity information file 422 will be described with reference to FIG. 6. FIG. 6 is a diagram illustrating an example of a structure of the activity information file 422 stored in the fraud monitoring device 40.

The activity information file 422 stores activity information of the customer in association with a terminal ID that uniquely identifies the self-service POS terminal 20. The activity information of the customer includes scan information and image information.

The scan information is information related to an item ID read by the scanner 28. In other words, the scan information is information related to scanning of an item 13. The scan information includes a scan time and an acquired item ID.

The scan time is the time at which the item ID was read by the scanner 28.

The acquired item ID is the read item ID.

The image information includes a capture time and an image I (or a video) captured by the camera 31.

The capture time is the time at which the image I was captured.

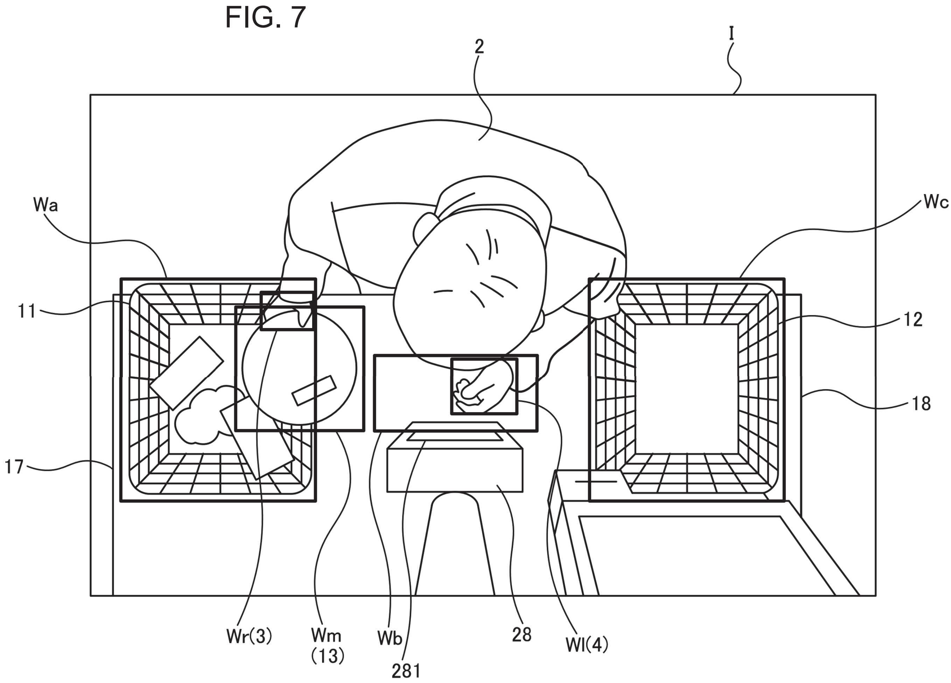

The fraud monitoring device 40 analyzes the contents of the activity information file 422 to determine whether an item is placed in the reusable bag 12 after being scanned or an item is placed in the reusable bag 12 without being scanned. A specific analysis method will be described in detail later (see FIG. 7).

### (Method of Detecting Fraudulent Activity of Customer)

A method of detecting a fraudulent activity of the customer by the fraud monitoring device 40 will be described with reference to FIG. 7. FIG. 7 is a diagram for describing a method performed by the fraud monitoring device 40 to recognize a scan operation performed by a customer based on an image (or a video) captured by the camera 31.

The fraud monitoring device 40 determines whether the customer 2 has performed a fraudulent activity when holding the item 13 over the scanner 28 by using the activity information file 422 acquired from the self-service POS terminal 20.

The fraud monitoring device 40 sets a window Wa, a window Wb, and a window Wc in the image I.

The window Wa is set to an area including the shopping basket 11. More specifically, the fraud monitoring device 40 sets the window Wa at the position of the basket stand 17 on which the shopping basket 11 is placed. The window Wa is an example of a first area in the present disclosure.

The window Wb is set to an area facing the scan window 281 of the scanner 28. The window Wb is an example of a second area in the present disclosure.

The window Wc is set to an area including the reusable bag 12. More specifically, the fraud monitoring device 40 sets the window Wc at the position of the item packing stand 18 on which the reusable bag 12 is placed. The window Wc is an example of a third area in the present disclosure. In the item registration path for registering the item 13, the first area is upstream of the second area facing the scanner 28, and the third area is downstream of the second area.

Since the image I is obtained by capturing the customer 2 from above, a right hand 3 and a left hand 4 of the customer 2 are captured in the image I. The fraud monitoring device 40 performs a well-known person detection process for detecting the posture of a person captured in the image I. As a result, an area Wr including the right hand 3 of the customer 2 and an area Wl including the left hand 4 of the customer 2 are detected. The fraud monitoring device 40 tracks the right hand 3 and the left hand 4 of the customer 2 by performing the same process on multiple temporally consecutive images I (that is, a video).

The fraud monitoring device 40 then detects that the right hand 3 or the left hand 4 of the customer 2 has entered the window Wa including the shopping basket 11 and has held the item 13. The fraud monitoring device 40 detects the entry of the right hand 3 or the left hand 4 of the customer 2 into the window Wa when the area Wr including the right hand 3 or the area Wl including the left hand 4 overlaps the window Wa. Also, the fraud monitoring device 40 determines that the customer 2 has held the item 13 when detecting an area Wm that moves along with the area Wr or the area Wl. FIG. 7 illustrates a state in which the customer 2 is holding the item 13 with the right hand 3.

The fraud monitoring device 40 then determines whether the area Wm indicating the item 13 has crossed the window Wb and whether the scanner 28 has read the item code of the item 13 at the timing when the area Wm indicating the item 13 crossed the window Wb. The fraud monitoring device 40 determines whether the area Wm indicating the item 13 has crossed the window Wb by monitoring the temporal change in the overlap between the area Wm and the window Wb. Also, the fraud monitoring device 40 determines whether the scanner 28 has read the item code of the item 13 when the area Wm indicating the item 13 crossed the window Wb based on whether the scan time in the activity information file 422 matches the time when the area Wm detected from the image I overlapped the window Wb.

The fraud monitoring device 40 then determines whether the scanned item 13 is placed in the reusable bag 12. Specifically, the fraud monitoring device 40 determines whether the right hand 3 or the left hand 4 of the customer 2 holding the item 13 has entered the window Wc including the reusable bag 12 and whether the customer 2 has released the item 13. The fraud monitoring device 40 determines that the right hand 3 or the left hand 4 of the customer 2 has entered the window Wc when the area Wr including the right hand 3 or the area Wl including the left hand 4 has overlapped the window Wc. Also, the fraud monitoring device 40 determines that the customer 2 has released the item 13 when the area Wm moving along with the area Wr or the area Wl is no longer detected.

The above activity corresponds to a case in which the customer 2 correctly scans the item. When an activity different from the above activity is detected, the fraud monitoring device 40 determines that the customer 2 may have performed a fraudulent activity.

For example, when the scanner 28 did not read the item code of the item 13 even though the item 13 was moved from the shopping basket 11 to the reusable bag 12 along a correct path (or an item registration path), the fraud monitoring device 40 determines that the customer 2 may have performed a fraudulent activity.

### (Fraud Detection Method Considering Head Position and Head Orientation of Customer)

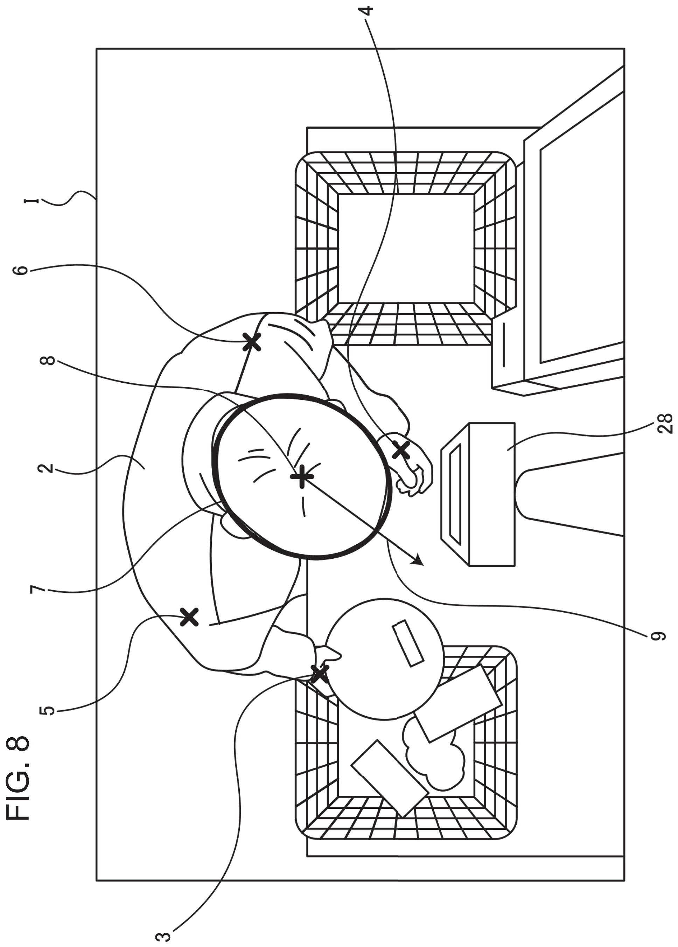

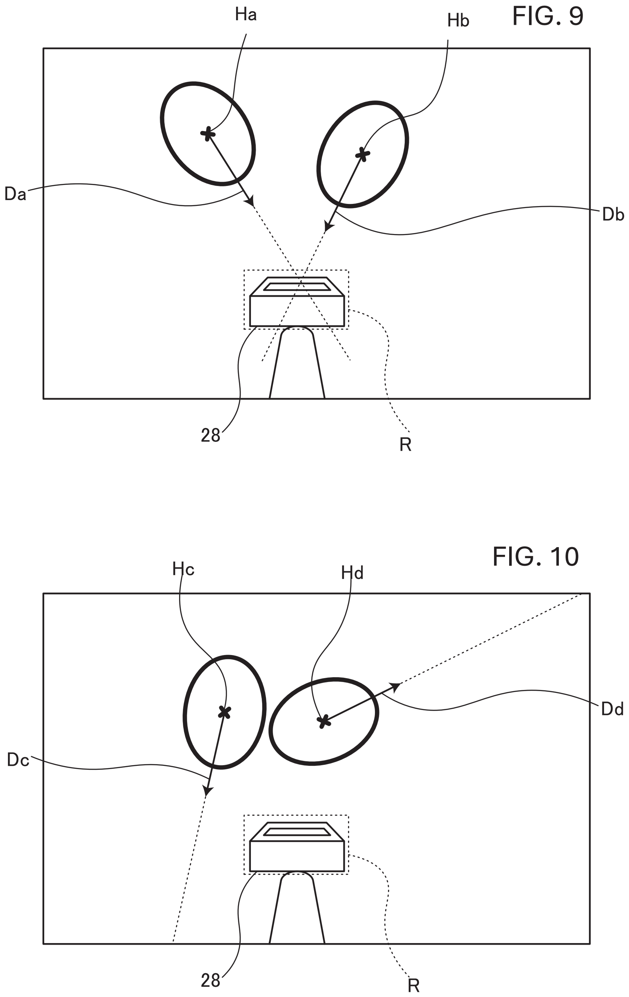

A fraud detection method performed by the fraud monitoring device 40 considering the head position and the head orientation of the customer 2 will be described with reference to FIGS. 8, 9, and 10. FIG. 8 is a diagram for describing an example of a method in which the fraud monitoring device 40 detects the position of the customer 2 and the head orientation of the customer 2 from an image captured by the camera 31. FIG. 9 is a diagram illustrating an example in which the fraud monitoring device 40 determines that the face of the customer is directed toward the scanner 28. FIG. 10 is a diagram illustrating an example in which the fraud monitoring device 40 determines that the face of the customer 2 is not directed toward the scanner 28.

With the fraud detection method described above (see FIG. 7), for example, the fraud monitoring device 40 may determine that the customer 2 may have performed a fraudulent activity when the customer 2 turns around to check behind while scanning the item 13, and the item 13, which is held in the hand and has not been scanned, moves to the position of the reusable bag 12. Also, the fraud monitoring device 40 may determine that the customer 2 may have performed a fraudulent activity when the customer 2, who is not familiar with the method of registering the item 13, looks around to call a store clerk while holding the item 13.

The fraud monitoring device 40 included in the fraud monitoring system 10 of the present embodiment prevents erroneous detection of a fraudulent activity of the customer 2 by considering the head position and the head orientation of the customer 2 in fraud detection.

Specifically, as illustrated in FIG. 8, the fraud monitoring device 40 detects a head position 8 and a head orientation 9 of the customer 2 when the item 13 is scanned.

The fraud monitoring device 40 identifies a head area 7 of the customer 2 when detecting a person in the image I. Since the camera 31 captures the customer 2 from above, the head area 7 of the customer 2 has a substantially elliptical shape. The fraud monitoring device 40 performs elliptical approximation on the identified head area 7, and sets the center of gravity of the approximated elliptical area as the head position 8 of the customer 2. The head position 8 is an example of a position of a customer in the present disclosure.

Next, the fraud monitoring device 40 detects a right shoulder 5, a left shoulder 6, the right hand 3, and the left hand 4, which are feature points of a person. The fraud monitoring device 40 then identifies the head orientation 9, which is the orientation of the head area 7 of the customer 2, based on the positional relationship among the right shoulder 5, the left shoulder 6, the right hand 3, the left hand 4, and the head area 7. That is, the head orientation 9 is the longitudinal direction of the approximated elliptical area of the head area 7. In the example of FIG. 8, it is natural to determine that the customer 2 is facing the side on which the right hand 3 and the left hand 4 are present, and therefore it is determined that the head orientation 9 of the customer 2 is toward the scanner 28.

When the determined head orientation 9 of the customer 2 is toward a region R including the scanner 28, the fraud monitoring device 40 determines that the customer 2 is facing the scanner 28. On the other hand, when the head orientation 9 of the customer 2 is not toward the region R including the scanner 28, it is determined that the customer 2 is not facing the scanner 28.

FIG. 9 is an example in which the fraud monitoring device 40 determines that the customer 2 is facing the scanner 28. FIG. 9 illustrates an example in which the customer 2 is facing a direction corresponding to a head orientation Da from the head position Ha and an example in which the customer 2 is facing a direction corresponding to a head orientation Db from a head position Hb. In either case, since the lines representing the head orientation Da and the head orientation Db pass through the region R including the scanner 28, the fraud monitoring device 40 determines that the customer 2 is facing the scanner 28.

FIG. 10 is an example in which the fraud monitoring device 40 determines that the customer 2 is not facing the scanner 28. FIG. 10 illustrates an example in which the customer 2 is facing a direction corresponding to a head orientation Dc from a head position Hc and an example in which the customer 2 is facing a direction corresponding to a head orientation Dd from a head position Hd. In either case, since the lines representing the head orientation Dc and the head orientation Dd do not pass through the region R including the scanner 28, the fraud monitoring device 40 determines that the customer 2 is not facing the scanner 28.

### (Functional Configuration of Fraud Monitoring System)

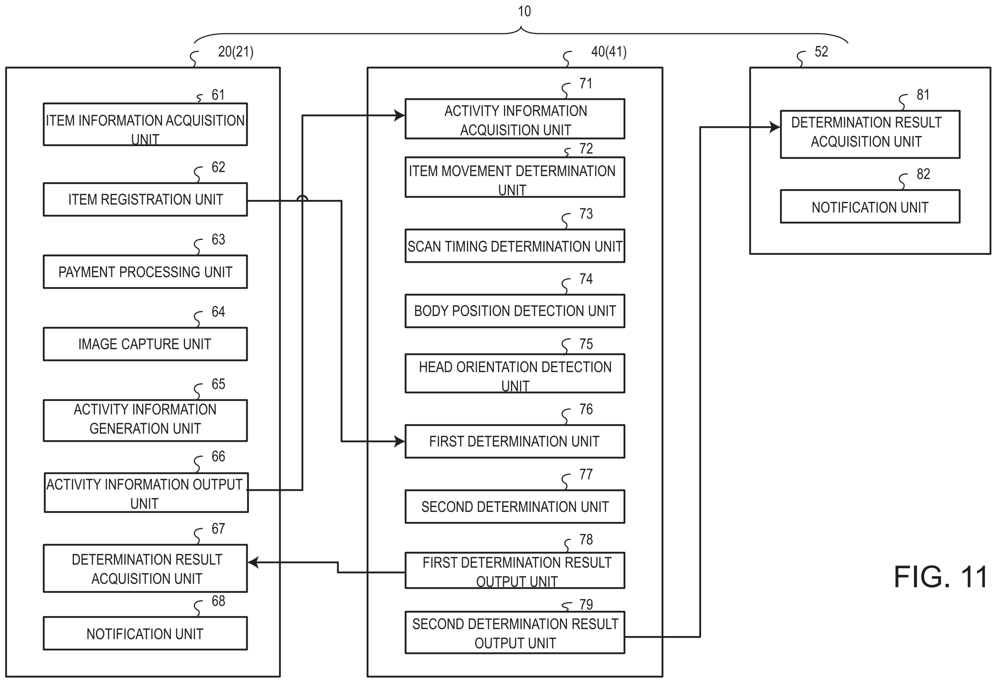

A functional configuration of the fraud monitoring system 10 will be described with reference to FIG. 11. FIG. 11 is a functional block diagram illustrating an example of a functional configuration of the fraud monitoring system 10 according to the embodiment.

### (Functional Configuration of Self-Service POS Terminal)

First, a functional configuration of the self-service POS terminal 20 will be described.

The control unit 21 of the self-service POS terminal 20 loads the control program 221 into the RAM 213 and executes the loaded control program 221 to implement an item information acquisition unit 61, an item registration unit 62, a payment processing unit 63, an image capture unit 64, an activity information generation unit 65, an activity information output unit 66, a determination result acquisition unit 67, and a notification unit 68 illustrated in FIG. 11 as functional units. Note that some or all of these functional units may be implemented by dedicated hardware.

The item information acquisition unit 61 reads the code symbol of an item held over the scan window 281 of the scanner 28, thereby acquiring identification information (for example, an item code) for uniquely identifying the item to be purchased by the customer 2.

The item registration unit 62 acquires an instruction to start item registration from the customer 2. Specifically, the item registration unit 62 determines that the start of item registration has been instructed when an item registration start button (not shown) displayed on the display 26 is pressed. The item registration unit 62 registers an item having the identification information acquired by the item information acquisition unit 61. Specifically, the item registration unit 62 generates the item registration file 223 (see FIG. 3) in which item information including the identification information is registered in association with a transaction code for identifying a single transaction. The item registration unit 62 receives an input from the customer 2 indicating that the registration of all items has been completed. Specifically, the item registration unit 62 determines that the registration of all items has been completed upon detecting that a registration completion button (not shown) displayed on the display 26 is pressed. When the customer 2 completes the registration of all items, the item registration unit 62 outputs identification information for identifying the self-service POS terminal 20 and information indicating that the item registration has been completed to the fraud monitoring device 40.

The payment processing unit 63 performs a payment process for payment of the total price of the items registered in the item registration file 223. The payment processing unit 63 receives payment for the total price of the items with a payment method (credit payment, code payment, electronic money payment, or the like) specified by the customer 2. When the self-service POS terminal 20 supports cash payment, the payment processing unit 63 may receive payment for the total price in cash from the customer 2.

When the customer 2 presses the item registration start button (not shown) displayed on the display 26 to start registration of items, the image capture unit 64 starts capturing a video including the customer 2 (for example, a video including images I in FIG. 4) with the camera 31. The image capture unit 64 continues capturing images I until the customer 2 presses a payment button (not shown) displayed on the display 26 to complete the registration of items or until the notification unit 68 displays a warning indicating suspected fraud by the customer 2 on the display 26. The capture interval of images I may be set to any value, such as 1/30 second.

The activity information generation unit 65 generates activity information, which includes identification information for uniquely identifying an item 13 to be purchased by the customer 2 and a video (a set of images I) obtained by capturing a scene in which the customer 2 holds the item 13 and moves the item 13 from the shopping basket 11 (or the window Wa) across the window Wb facing the scanner 28 to the reusable bag 12 (or the window Wc), in association with the times when the identification information and the video are acquired. In other words, the video is obtained by capturing an activity related to the item 12 and performed by the customer 2 at the self-service POS terminal 20.

The activity information output unit 66 outputs the activity information of the customer 2 generated by the activity information generation unit 65 to the fraud monitoring device 40.

The determination result acquisition unit 67 acquires a determination result of the first determination unit 76 from the fraud monitoring device 40.

When the determination result acquisition unit 67 acquires a determination result indicating suspected fraud by the customer 2, the notification unit 68 notifies the customer 2 by, for example, displaying a warning on the display 26. Also, when the determination result acquisition unit 67 acquires a determination result indicating suspected fraud by the customer 2, the notification unit 68 may get the attention of nearby store clerks by causing the warning light 32 to turn on or blink.

### (Functional Configuration of Fraud Monitoring Device)

Next, a functional configuration of the fraud monitoring device 40 will be described.

The control unit 41 of the fraud monitoring device 40 loads the control program 421 into the RAM 413 and executes the loaded control program 401 to implement an activity information acquisition unit 71, an item movement determination unit 72, a scan timing determination unit 73, a body position detection unit 74, a head orientation detection unit 75, a first determination unit 76, a second determination unit 77, a first determination result output unit 78, and a second determination result output unit 79 illustrated in FIG. 11 as functional units. Note that some or all of these functional units may be implemented by dedicated hardware.

The activity information acquisition unit 71 acquires activity information of the customer 2 from the self-service POS terminal 20 together with identification information for identifying the self-service POS terminal 20. As described above, the activity information of the customer 2 includes identification information for uniquely identifying an item 13 to be purchased by the customer 2 and a video obtained by capturing a scene in which the customer 2 holds the item 13 and moves the item 13 from the shopping basket 11 (or the window Wa) across the window Wb facing the scanner 28 to the reusable bag 12 (window Wc) in association with the times when the identification information and the video are acquired. The activity information acquisition unit 71 is an example of an acquisition unit in the present disclosure.

The item movement determination unit 72 determines whether the customer 2 has moved the item 13, which has been picked up in the window Wa (or first area), across the window Wb (or second area) to the window Wc (or third area). That is, the item movement determination unit 72 determines whether the item 13 has been properly moved.

When the item movement determination unit 72 determines that the customer 2 has moved the item 13, which has been picked up in the window Wa, across the window Wb to the window Wc (or third area), the scan timing determination unit 73 determines whether the scanner 28 has read the item code of the item 13. When the scan timing determination unit 73 determines that the scanner 28 has read the item code of the item 13, the scan timing determination unit 73 determines that the customer 2 is not committing fraud.

The body position detection unit 74 detects the head position 8 of the customer 2 from the image I. The body position detection unit 74 is an example of a detection unit in the present disclosure.

The head orientation detection unit 75 detects the head orientation 9 of the customer 2 from the image I. The head orientation detection unit 75 is an example of a detection unit in the present disclosure.

The first determination unit 76 determines that the customer 2 has committed fraud when the head orientation 9 as viewed from the head position 8 of the customer 2 is toward the scanner 28 and when the scan timing determination unit 73 determines that the item code of the item 13 has not been read while the customer 2 moves the item 13 picked up in the window Wa (or first area) to the window Wc (or third area) across the window Wb (or second area). The first determination unit 76 acquires information indicating that the item registration is completed from the self-service POS terminal 20.

The second determination unit 77 determines that the customer 2 has committed fraud regardless of the head position 8 and the head orientation 9 of the customer 2 when the item movement determination unit 72 detects a proper movement of the item 13, that is, when the customer 2 has moved the item 13 picked up in the window Wa (or first area) to the window Wc (or third area) across the window Wb (or second area), and when the scan timing determination unit 73 determines that the item code of the item 13 has not been read while the item 13 is moved to the window Wc. That is, the second determination unit 77 determines the fraud committed by the customer 2 more strictly than the first determination unit 76.

When the first determination unit 76 determines that the customer 2 is committing fraud, the first determination result output unit 78 notifies the self-service POS terminal 20 (or sales data processing device) that the customer 2 is committing fraud. The first determination result output unit 78 is an example of a first notification control unit of the present disclosure.

When the second determination unit 77 determines that the customer 2 is committing fraud, the second determination result output unit 79 notifies the attendant terminal 52 being monitored by a store clerk that the customer 2 is committing fraud. The second determination result output unit 79 preferably outputs, to the attendant terminal 52, information indicating that the customer 2 is committing fraud, identification information for identifying the corresponding self-service POS terminal 20, and a video based on which the second determination unit 77 has determined that the customer 2 is committing fraud, in association with each other. The second determination result output unit 79 is an example of a second notification control unit in the present disclosure.

### (Functional Configuration of Attendant Terminal)

Next, a functional configuration of the attendant terminal 52 will be described.

A control unit (not shown) of the attendant terminal 52 implements a determination result acquisition unit 81 and a notification unit 82 shown in FIG. 11 as functional units by executing a control program (not shown). Note that some or all of these functional units may be implemented by dedicated hardware.

The determination result acquisition unit 81 acquires a determination result of the second determination unit 77 from the fraud monitoring device 40.

When a person monitoring the attendant terminal 52 determines that the customer 2 is committing fraud, the notification unit 82 transmits, to a mobile terminal (not shown) carried by each store clerk, identification information for identifying the self-service POS terminal 20 and information indicating that the customer 2 may be committing fraud at the self-service POS terminal 20.

### (Process Performed by Self-Service POS Terminal)

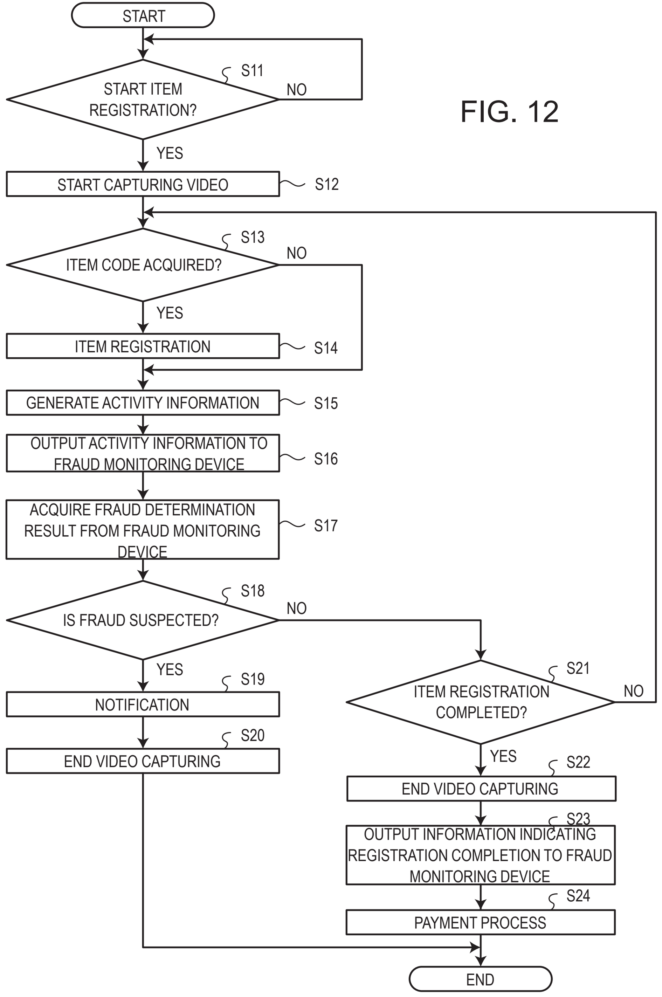

A process performed by the self-service POS terminal 20 included in the fraud monitoring system 10 will be described with reference to FIG. 12. FIG. 12 is a flowchart illustrating an example of a process performed by the self-service POS terminal 20 included in the fraud monitoring system 10 according to the embodiment.

The item registration unit 62 determines whether an instruction to start item registration has been received from the customer 2 (step S11). When it is determined that the instruction to start item registration has been received from the customer 2 (step S11: Yes), the process proceeds to step S12. On the other hand, when the instruction to start item registration has not been received from the customer 2 (step S11: No), step S11 is repeated.

When it is determined at step S11 that the instruction to start item registration has been received from the customer 2, the image capture unit 64 starts capturing a video of the customer 2 with the camera 31 (step S12).

The item information acquisition unit 61 determines whether the item code of the item 13 has been acquired (step S13). When it is determined that the item code of the item 13 has been acquired (step S13: Yes), the process proceeds to step S14. On the other hand, when it is determined that the item code of the item 13 has not been acquired (step S13: No), the process proceeds to step S15.

When it is determined at step S13 that the item code of the item 13 has been acquired, the item registration unit 62 registers item information including the item code in the item registration file 223 in association with a transaction code for identifying a transaction (step S14).

The activity information generation unit 65 generates activity information including scan information related to scanning of the item 13 by the customer 2 and image information obtained by capturing the movement or activity of the customer. (Step S15). For example, when the item code has been acquired (Step S13: Yes), the scan information includes the item code; and when the item code has not been acquired (Step S13: No), the scan information does not include the item code.

The activity information output unit 66 outputs the activity information generated at step S15 to the fraud monitoring device 40 (step S16).

The determination result acquisition unit 67 acquires a current fraud determination result for the customer 2 from the fraud monitoring device 40 (step S17).

The notification unit 68 determines whether a determination result indicating suspected fraud by the customer 2 has been acquired from the fraud monitoring device 40 (step S18). When it is determined that the determination result indicating suspected fraud by the customer 2 has been acquired (step S18: Yes), the process proceeds to step S19. On the other hand, when it is determined that the determination result indicating suspected fraud by the customer 2 has not been acquired (step S18: No), the process proceeds to step S21.

When it is determined at step S18 that the determination result indicating suspected fraud by the customer 2 has been acquired, the notification unit 68 notifies the customer 2 by, for example, displaying a warning on the display 26 (step S19). At this step, the warning light 32 may be caused to turn on or blink to get the attention of nearby store clerks.

When the notification is made at step S19, the image capture unit 64 ends the capturing of the video of the customer 2 (step S20). Thereafter, the self-service POS terminal 20 ends the process.

Referring back to step S18, when it is determined that the determination result indicating suspected fraud by the customer 2 has not been acquired, the item registration unit 62 determines whether the customer 2 has completed item registration (step S21). When it is determined that the customer 2 has completed item registration (step S21: Yes), the process proceeds to step S22. On the other hand, when it is determined that the customer 2 has not completed item registration (step S21: No), the process returns to step S13. The item registration unit 62 determines that item registration has been completed when detecting that a registration completion button (not shown) displayed on the display 26 is pressed.

When it is determined at step S21 that the item registration by the customer 2 has been completed, the image capture unit 64 ends the capturing of the video of the customer 2 (step S22).

The item registration unit 62 outputs identification information for identifying the self-service POS terminal 20 and information indicating the completion of the item registration to the fraud monitoring device 40 (step S23).

The payment processing unit 63 performs a payment process for making payment for the total price of the items registered in the item registration file 223 with a payment method specified by the customer 2 (step S24). Thereafter, the self-service POS terminal 20 ends the process.

### (Process Performed by Fraud Monitoring Device)

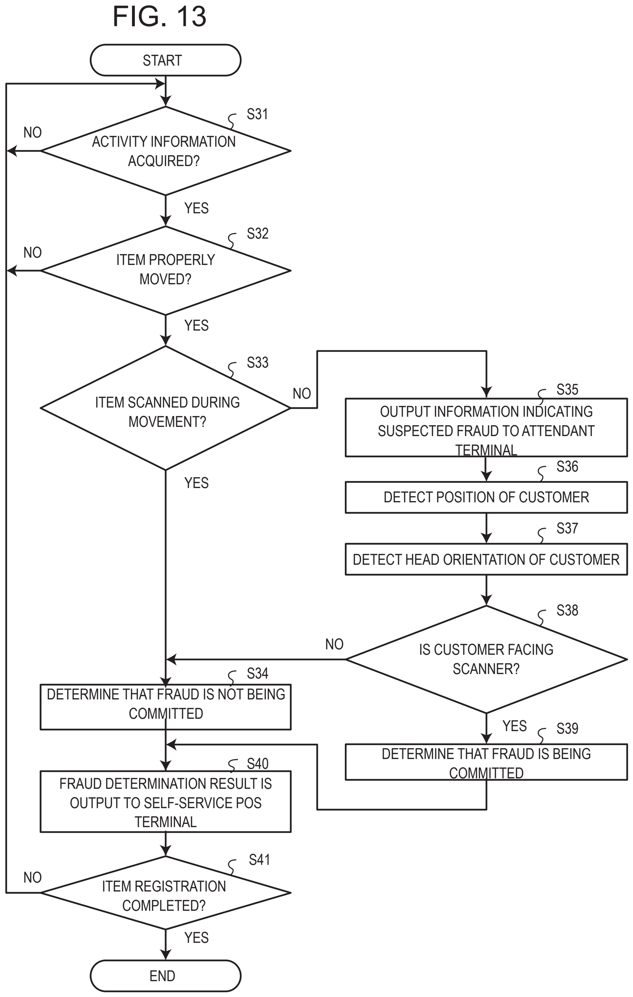

A process performed by the fraud monitoring device 40 included in the fraud monitoring system 10 will be described with reference to FIG. 13. FIG. 13 is a flowchart illustrating an example of a process performed by the fraud monitoring device 40 included in the fraud monitoring system 10 according to the embodiment. The processor (CPU 411) of the fraud monitoring device 40 may be configured to execute a program stored in a memory (e.g., the RAM 413 or the storage unit 42) to perform the steps in the process described below.

The activity information acquisition unit 71 determines whether activity information of the customer 2 has been acquired from the self-service POS terminal 20 (step S31). When it is determined that the activity information of the customer 2 has been acquired (step S31: Yes), the process proceeds to step S32. On the other hand, when it is determined that the activity information of the customer 2 has not been acquired (step S31: No), step S31 is repeated.

When it is determined at step S31 that the activity information of the customer 2 has been acquired, the item movement determination unit 72 determines whether the item 13 has been properly moved (step S32). In other words, the item movement determination unit 72 determines whether the item 13 has been moved by the customer 2 along the item registration path for registering the item 12 from the first area upstream of the second area facing the scanner 28, across the second area, to the third area downstream of the second area. When it is determined that the item 13 has been properly moved (step S32: Yes), the process proceeds to step S33. On the other hand, when it is determined that the item 13 has not been properly moved (step S32: No), the process returns to step S31.

When it is determined at step S32 that the item 13 has been properly moved, the scan timing determination unit 73 determines whether the item 13 has been scanned while being moved (step S33). In other words, the scan timing determination unit 73 determines whether the identification information of the item 13 has been read by the scanner 28. Whether the identification information of the item 13 has been read may be determined by, for example, determining whether the identification information is included in the scan information received from the self-service POS terminal 20. When it is determined that the item 13 has been scanned while being moved (Step S33: Yes), the process proceeds to Step S34. On the other hand, when it is determined that the item 13 has not been scanned while being moved (step S33: No), the process proceeds to step S35.

When it is determined at step S33 that the item 13 has been scanned while being moved, the scan timing determination unit 73 determines that the customer 2 is not committing fraud (step S34).

The first determination result output unit 78 outputs a fraud determination result to the self-service POS terminal 20 (step S40).

The first determination unit 76 determines whether information indicating the completion of item registration has been acquired from the self-service POS terminal 20 (step S41). When it is determined that the information indicating the completion of item registration has been acquired (step S41: Yes), the fraud monitoring device 40 ends the process. On the other hand, when it is determined that the information indicating the completion of item registration has not been acquired (step S41: No), the process returns to step S31.

Referring back to step S33, when it is determined that the item 13 has not been scanned while being moved, the second determination unit 77 determines that the customer 2 is committing fraud or is suspected of committing fraud. Then, the second determination result output unit 79 outputs, to the attendant terminal 52, information indicating that the customer 2 is committing fraud or suspected of committing fraud, identification information for identifying the corresponding self-service POS terminal 20, and a video based on which the second determination unit 77 has determined that the customer 2 is committing fraud or suspected of committing fraud, in association with each other (step S35). In other words, when the item 13 has been moved along the item registration path and the identification information of the item 13 has not been read by the scanner 28, the second determination result output unit 79 controls the communication controller 44 to transmit, to the attendant terminal 52, a fraud determination result indicating suspected fraud by the customer 2 regardless of whether the head orientation 9 as viewed from the head position 8 of the customer 2 is toward the scanner 28.

The body position detection unit 74 detects the head position 8 of the customer 2 from the image I (step S36).

The head orientation detection unit 75 detects the head orientation 9 of the customer 2 from the image I (step S37).

The first determination unit 76 determines whether the head orientation 9 as viewed from the head position 8 of the customer 2 is toward the scanner 28 (step S38). When it is determined that the head orientation 9 as viewed from the head position 8 of the customer 2 is toward the scanner 28 (step S38: Yes), the process proceeds to step S39. On the other hand, when it is determined that the head orientation 9 as viewed from the head position 8 of the customer 2 is not toward the scanner 28 (step S38: No), the process proceeds to step S34.

When it is determined at step S38 that the head orientation 9 as viewed from the head position 8 of the customer 2 is toward the scanner 28 (or the customer 2 is facing the scanner 28), the first determination unit 76 determines that the customer 2 is committing fraud (step S39). In other words, the first determination unit 76 determines that the customer 2 is committing fraud when the item 13 has been moved along the item registration path, the identification information of the item 13 has not been read by the scanner 28, and the head orientation 9 as viewed from the head position 8 of the customer 2 is toward the scanner 28. Thereafter, the process proceeds to step S40.

### (Process Performed by Attendant Terminal)

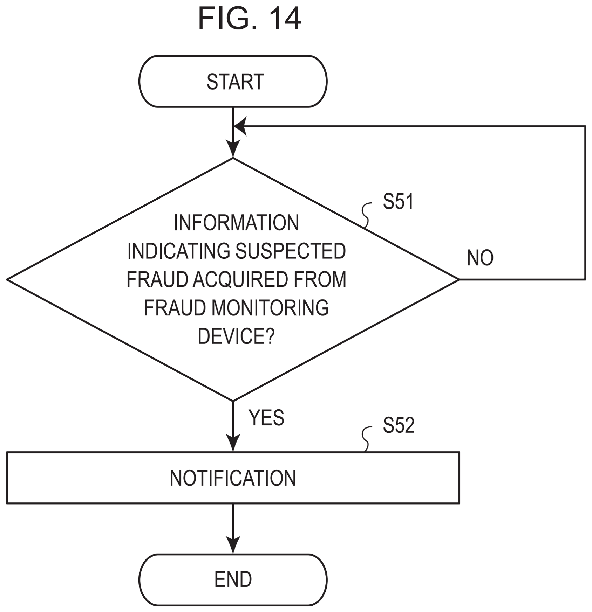

A process performed by the attendant terminal 52 included in the fraud monitoring system 10 will be described with reference to FIG. 14. FIG. 14 is a flowchart illustrating an example of a process performed by the attendant terminal 52 included in the fraud monitoring system 10 according to the embodiment.

The determination result acquisition unit 81 determines whether information indicating suspected fraud has been acquired from the fraud monitoring device 40 (step S51). When it is determined that the information indicating suspected fraud has been acquired (step S51: Yes), the process proceeds to step S52. On the other hand, when it is determined that the information indicating suspected fraud has not been acquired (step S51: No), the determination at step S51 is repeated.

When it is determined at step S51 that the information indicating suspected fraud has been acquired, the notification unit 82 transmits, to mobile terminals (not shown) carried by store clerks, identification information for identifying the self-service POS terminal 20 and information indicating that the customer 2 is suspected of committing fraud at the self-service POS terminal 20 (step S52). Thereafter, the attendant terminal 52 ends the process.

### (Effects of Embodiment)

As described above, the fraud monitoring device 40 of the embodiment includes the activity information acquisition unit 71 (or acquisition unit) that acquires identification information uniquely identifying the item 13 to be purchased by the customer 2 and read by the scanner 28 included in the self-service POS terminal 20 (or sales data processing device) and a video obtained by capturing a scene in which the customer 2 holds the item 13 and moves the item 13 from the window Wa (or first area) across the window Wb (or second area) facing the scanner 28 to the window Wc (or third area) in association with the times when the identification information is read and the video is captured; the body position detection unit 74 (or detection unit) that detects the position of the customer 2 from the video; the head orientation detection unit 75 (or detection unit) that detects the head orientation of the customer 2; the first determination unit 76 that determines whether the customer 2 is committing fraud based on the identification information and the video acquired by the activity information acquisition unit 71 when the head orientation of the customer 2 viewed from the position of the customer 2 is toward the scanner 28, and the first determination result output unit 78 (or first notification control unit) that notifies the self-service POS terminal 20 that the customer 2 is committing fraud when the first determination unit 76 determines that the customer 2 is committing fraud. This configuration makes it possible to prevent erroneous determinations that the customer 2 has committed fraud.

In the fraud monitoring device 40 of the embodiment, when the head orientation of the customer 2 viewed from the position of the customer 2 is toward the scanner 28 and the identification information of the item 13 is not read while the customer 2 moves the item 13 picked up in the window Wa (or first area) across the window Wb (second area) to the window Wc (third area), the first determination unit 76 determines that the customer 2 is committing fraud. With this configuration, it is possible to determine that the customer 2 is not committing fraud when the customer 2 is not facing the scanner 28 while performing item registration.

The fraud monitoring device 40 according to the embodiment further includes the second determination unit 77 that determines that the customer 2 is committing fraud regardless of the position of the customer 2 and the head orientation of the customer 2 when the identification information of the item 13 is not read while the customer 2 moves the item 13 picked up in the window Wa (or first area) across the window Wb (or second area) to the window Wc (or third area); and the second determination result output unit 79 (or second notification control unit) that notifies the attendant terminal 52 being monitored by a store clerk that the customer 2 is committing fraud when the second determination unit 77 determines that the customer 2 is committing fraud. With this configuration, when there is a possibility that the customer 2 is committing fraud, information indicating suspected fraud by the customer 2 is transmitted to the attendant terminal 52 being monitored by the store clerk to enable the store clerk to determine whether the customer 2 is committing fraud.

While certain embodiments have been described, these embodiments have been presented by way of example only, and are not intended to limit the scope of the disclosure. Indeed, the novel embodiments described herein may be embodied in a variety of other forms; furthermore, various omissions, substitutions and changes in the form of the embodiments described herein may be made without departing from the framework of the disclosure. The accompanying claims and their equivalents are intended to cover such forms or modifications as would fall within the scope of the disclosure.

## Claims

1. A monitoring device connectable to a self-service point of sale (POS) terminal installed in a store, the monitoring device comprising:
a network interface;
a memory; and
a processor configured to execute a program that is stored in the memory to perform the steps of:
acquiring activity information related to an item sold at the store and to be purchased by a customer and received via the network interface from the POS terminal together with identification information of the POS terminal, the activity information including scan information related to scanning of the item by a scanner of the POS terminal and a video obtained by capturing an activity related to the item and performed by the customer at the POS terminal,
detecting a position and a head orientation of the customer from the video,
determining whether the customer is committing fraud based on the activity information and the position and the head orientation of the customer, and
upon determining that the customer is committing fraud, causing the POS terminal to issue a notification.

2. The monitoring device according to claim 1, wherein
the steps further include
determining, based on the video, whether the item has been moved by the customer along an item registration path for registering the item from a first area upstream of a second area facing the scanner, across the second area, to a third area downstream of the second area, and
determining, based on the scan information, whether identification information of the item has been read by the scanner.

3. The monitoring device according to claim 2, wherein
the steps further include
determining whether the head orientation as viewed from the position of the customer is toward the scanner, and
the customer is determined to be committing fraud when the item has been moved along the item registration path, the identification information of the item has not been read by the scanner, and the head orientation as viewed from the position of the customer is toward the scanner.

4. The monitoring device according to claim 2 or 3, wherein even when the item has been moved along the item registration path and the identification information of the item has not been read by the scanner, the customer is determined to be not committing fraud when the head orientation as viewed from the position of the customer is not toward the scanner.

5. The monitoring device according to claim 3 or 4, wherein the steps further include
when the customer is determined to be committing fraud, controlling the network interface to transmit, to the POS terminal, a fraud determination result indicating that the customer is committing fraud.

6. The monitoring device according to any one of claims 2 to 5, wherein whether the identification information of the item has been read by the scanner is determined by determining whether the scan information includes the identification information.

7. The monitoring device according to claim 2, wherein the steps further include
when the item has been moved along the item registration path and the identification information of the item has not been read by the scanner, controlling the network interface to transmit, to an attendant terminal being monitored by an operator, a fraud determination result indicating suspected fraud by the customer, regardless of whether the head orientation as viewed from the position of the customer is toward the scanner.

8. The monitoring device according to claim 7, wherein the fraud determination result is transmitted to the attendant terminal together with the identification information of the POS terminal and the video.

9. The monitoring device according to claim 7 or 8, wherein whether the identification information of the item has been read by the scanner is determined by determining whether the scan information includes the identification information.

10. The monitoring device according to any one of claims 1 to 9, wherein the position of the customer is detected by identifying a head area of the customer in the video, performing elliptical approximation on the identified head area to obtain an approximated elliptical area, and setting a center of gravity of the approximated elliptical area as the position of the customer.

11. The monitoring device according to claim 10, wherein the head orientation of the customer is detected based on a positional relationship among the head area, right and left shoulders, and right and left hands of the customer identified from the video.

12. A method performed by a monitoring device connectable to a self-service point of sale (POS) terminal installed in a store, the method comprising:
acquiring activity information related to an item sold at the store and to be purchased by a customer and received from the POS terminal together with identification information of the POS terminal, the activity information including scan information related to scanning of the item by a scanner of the POS terminal and a video obtained by capturing an activity related to the item and performed by the customer at the POS terminal;
detecting a position and a head orientation of the customer from the video;
determining whether the customer is committing fraud based on the activity information and the position and the head orientation of the customer; and
upon determining that the customer is committing fraud, causing the POS terminal to issue a notification.

13. The method according to claim 12, further comprising:
determining, based on the video, whether the item has been moved by the customer along an item registration path for registering the item from a first area upstream of a second area facing the scanner, across the second area, to a third area downstream of the second area; and
determining, based on the scan information, whether identification information of the item has been read by the scanner.

14. The method according to claim 13, further comprising:
determining whether the head orientation as viewed from the position of the customer is toward the scanner, wherein
the customer is determined to be committing fraud when the item has been moved along the item registration path, the identification information of the item has not been read by the scanner, and the head orientation as viewed from the position of the customer is toward the scanner.

15. A non-transitory computer readable storage medium storing a program for causing a processor of a monitoring device connectable to a self-service point of sale (POS) terminal installed in a store to perform a process comprising:
acquiring activity information related to an item sold at the store and to be purchased by a customer and received from the POS terminal together with identification information of the POS terminal, the activity information including scan information related to scanning of the item by a scanner of the POS terminal and a video obtained by capturing an activity related to the item and performed by the customer at the POS terminal;
detecting a position and a head orientation of the customer from the video;
determining whether the customer is committing fraud based on the activity information and the position and the head orientation of the customer; and
upon determining that the customer is committing fraud, outputting a notification to the POS terminal.
